# EUROPEAN PATENT APPLICATION

(11) **EP 0 772 322 A2**
(43) Date of publication of application: **07.05.1997**
(21) Application number: 96113885.6
(22) Date of filing: 30.08.1996
(51) Int. Cl.: H04L 12/56, H04Q 11/04

(54) **System and methods of routing packets through a network with changing topology**

(30) Priority: 31.08.1995 US 522201
(71) Applicant: MOTOROLA, INC., Schaumburg, IL 60196 (US)
(72) Inventor: Natarajan, Kadathur S., Schaumburg IL 60173 (US)
(74) Representative: Morgan, Marc

(57) **Abstract**

A method (100) transfers packets (60), including ATM cells, through a constellation of satellites (20) in a manner that is nearly transparent from the perspective of an end-to-end virtual connection. According to the method (100), a source earth station (50) transmits a connection request to a currently serving satellite (21). The currently serving satellite (21) forwards the connection request to a serving ground control station (40) which then determines which path the packets (60) are routed along corresponding to predetermined time intervals. The serving ground control station (40) transmits the routing information to the source earth station (50) and packets (60) are routed through the satellites (20) using the routing information. Resource allocation information is transmitted to the other ground control stations (51) so that all stations (50, 51) have an up-to-date view of the total network state.

## Description

### Technical Field

This invention relates generally to space-based mobile telecommunication systems and, in particular, to a system and methods that support connection-oriented services in a network with changing topology.

### Background of the Invention

In standard Asynchronous Transfer Mode (ATM) networks, the definition of a communication path from an origination node to a destination node is based on a fundamental assumption that the network topology (consisting of ATM nodes and nigh-speed links interconnecting them) remains fixed for the entire duration of the connection (a call holding time). Connection admission control is a conventional process that is used to admit or deny requests for communication services utilizing the paths defined in the ATM network.

In some space-based telecommunication systems, the network topology is constantly changing. This is especially true where the network is a constellation of satellites orbiting the earth at low-earth or medium-earth altitudes. ATM cell-relay networks are connection-oriented and an assigned path must exist between a sender and a receiver before a transmission occurs. Therefore, there is a significant need for coupling fixed connection-oriented networks, such as ATM networks, with space-based mobile telecommunication systems that have changing network topology.

### Brief Description of the Drawings

FIG. 1 shows a general view of a space-based mobile telecommunication system according to a preferred embodiment of the present invention;
FIG. 2 shows a flowchart of a method determining routing information according to a preferred embodiment of the present invention;
FIG. 3 shows an example of an ordered sequence of paths and associated time intervals;
FIG. 4 shows an example of a network and a path from a source earth station to a destination earth station;
FIG. 5 shows an example of an encapsulated packet with routing and related information; and
FIG. 6 shows an example of routing a packet through a network according to routing information.

### Description of the Preferred Embodiments

The present invention routes packets through a space-based mobile telecommunication network, such as a constellation of low-earth orbit (LEO) satellites, that is interfaced with fixed, terrestrial-based, standard ATM networks. A basic assumption in standard ATM networks is that the ATM network topology remains fixed. However, in some space-based telecommunication systems, the satellite network topology and link capacities vary as a function of time. When a terrestrial ATM network is interconnected to a space-based communication network, the satellite network may effectively appear as a virtual ATM link between a source earth station and a destination earth station.

Assume in a space-based telecommunication network that the network is characterized by a set of satellites. The satellites switch at high-bandwidth rates and are interconnected to adjacent satellites by high-speed communication links. The present invention has utility for transferring packets, including ATM cells, through a constellation of satellites in a manner that is nearly transparent from the perspective of an end-trend virtual connection. The present invention supports, but is not limited to, the following two classes of service: (1) service requiring constant bit rate connections; and (2) service requiring unspecified bit rate connections.

A "satellite" as used throughout this description means a man-made object or vehicle intended to orbit the earth. A "satellite" is characterized by low-earth and medium-earth orbiting satellites and/or combinations thereof. A "constellation" means a number of satellites arranged in orbits for providing specified coverage (e.g., radio communication, remote sensing, etc.) of a portion, portions or all of the earth. A constellation typically includes multiple rings (or planes) of satellites and may have an equal number of satellites in each plane, although this is not essential. The terms "cell," "beam" and "antenna pattern" are not intended to be limited to any particular mode of generation and include those created by either terrestrial or space-based telecommunication systems and/or combinations thereof.

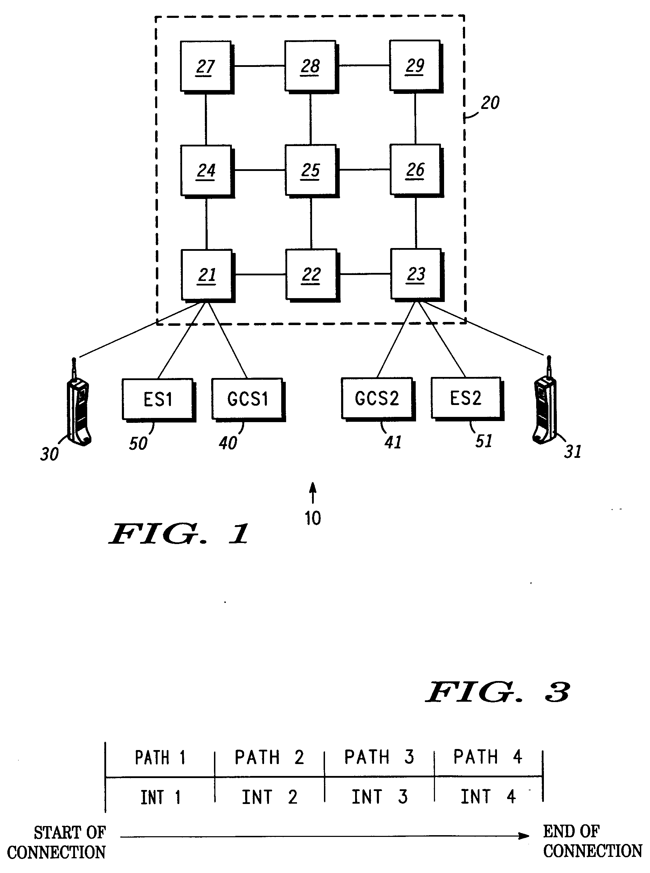

FIG. 1 shows a general view of space-based telecommunication system 10 according to a preferred embodiment of the present invention. Although FIG. 1 illustrates a highly simplified diagram of space-based mobile telecommunication system 10, system 10 is characterized by a constellation of satellites 20, any number of subscriber units 30, at least one ground control station 40 and at least one earth station 50. Generally, telecommunication system 10 may be viewed as a network of nodes, where satellites 21-29, ground control station 40 and earth station 50 are considered nodes in network 10.

All nodes of communication system 10 are or may be in data communication with other nodes of communication system 10 through communication links. The communication link may comprise data and/or control information. In addition, all nodes of telecommunication system 10 are or may be in data communication with other telephonic devices, including subscriber units 30, dispersed throughout the world through public service telephone networks (PSTNs) and/or conventional terrestrial communication devices coupled to a PSTN through conventional terrestrial base stations.

The present invention is applicable to space-based mobile telecommunication systems 10 that assign particular regions on the earth to specific cells on the earth, and preferably to systems that move cells across the surface of the earth. Although the present invention is applicable to space-based mobile telecommunication systems 10 having a constellation of satellites 20 in low-earth or medium-earth orbit, constellation 20 is preferably in low-earth orbit around earth.

The constellation of satellites 20 is characterized by at least one satellite. As shown in FIG. 1, an example of constellation 20 is characterized by satellites 21-29. Although nine satellites 21-29 are shown, the number of satellites may be greater or less than nine. The number of satellites is unimportant to the present invention. The present invention is also applicable to space-based telecommunication systems 10 having satellites 21-29 which orbit earth at any angle of inclination including polar, equatorial, inclined or other orbital patterns. The present invention is applicable to systems 10 where full coverage of the earth is not achieved (i.e., where there are "holes" in the telecommunication coverage provided by the constellation) and to systems 10 where plural coverage of portions of the earth occur (i.e., more than one satellite is in view of a particular point on the earth's surface).

Each satellite 21-29 communicates with other, nearby satellites 21-29 through cross-links. These cross-links form a backbone of space based mobile telecommunication system 10. Thus, a call or communication from one subscriber unit 30 located at any point on or near the surface of the earth may be routed through a number of satellites to within range of substantially any other point on the surface of the earth. A communication may be routed down to a subscriber unit 30 (which is receiving the call) on or near the surface of the earth from another satellite 21-29. How satellites 21-29 physically communicate (e.g., spread spectrum technology) with subscriber units 30, ground control stations 40,41 and earth stations 50,51 is well known to those of ordinary skill in the art.

Subscriber units 30 may be located anywhere on the surface of the earth or in the atmosphere above the earth. Mobile telecommunication system 10 may accommodate any number of subscriber units 30. Subscriber units 30 are preferably communication devices capable of receiving voice and/or data from satellites 21-29 and ground control station 40. By way of example, subscriber units 30 may be hand-held, mobile satellite cellular telephones adapted to transmit to and receive transmissions from satellites 21-29 and ground station 40.

How subscriber unit 30 physically transmits voice or data to and receives voice or data from satellites 21-29 is well known to those of ordinary skill in the art. In the preferred embodiment of the present invention, subscriber units 30 communicate with satellites 21-29 using a limited portion of the electromagnetic spectrum that is divided into numerous channels. The channels are preferably combinations of L-Band, K-Band and/or S-Band frequency channels but may encompass Frequency Division Multiple Access (FDMA) and/or Time Division Multiple Access (TDMA) and/or Code Division Multiple Access (CDMA) communication or any combination thereof. Other methods known to those of ordinary skill in the art may be used as well.

Ground control station 40 communicates with and controls satellites 21-29. As shown in FIG. 1, there may be multiple ground control stations 40,41 which are located at different regions on the earth. For example, there may be one ground control station located in Honolulu, another located in Los Angeles and another in Washington, D.C. Another way is to have separate ground control stations located in each country on the earth.

Ground control station 40 performs connection admission control, determines routes for setting connections through the satellite constellation 20 and communicates the chosen routes to earth stations 50,51. Ground control station 40 may additionally provide satellite control commands to satellites 21-29 so that satellites 21-29 maintain their proper position in their orbit and perform other essential house-keeping tasks. Ground control station 40 may also be responsible for receiving voice or data from satellites 21-29. How ground station 40 physically communicates (e.g., spread spectrum) with satellites 21-29 and subscriber units 30 is well known to those of ordinary skill in the art.

Earth station 50 connects voice or data calls made on the earth over PSTNs to satellite constellation 20. As shown in FIG. 1, there may be multiple earth stations 50,51 across the surface of the earth. Earth station 50 may be located anywhere on the earth, but is preferably located within a close proximity to a ground control station. Although earth station 50 and ground control station 40 are shown separately, they may be contained in a single structure with multiple antennas. It is not important whether the ground control station and the earth station are separate or joined together under one facility. How earth station 50 physically communicates (e.g., spread spectrum) with satellites 21-29 and subscriber units 30 is well known to those of ordinary skill in the art.

An earth station is identified as a source earth station (SES) when it is responsible for sending calls from the earth to satellite constellation 20. An earth station is a destination earth station (DES) when calls are transmitted by satellite constellation 10 to the earth. The communication path from a SES to a DES has three component subpaths over which a data packet or ATM cell must be transported: an uplink (e.g., from the SES or a subscriber unit to a source satellite), a satellite constellation 20 (from the source satellite to a destination satellite in the satellite constellation) and a downlink (e.g., from the destination satellite down to the DES or a subscriber unit). An ATM cell is characterized by data, voice or video information plus a control header related to ATM networking.

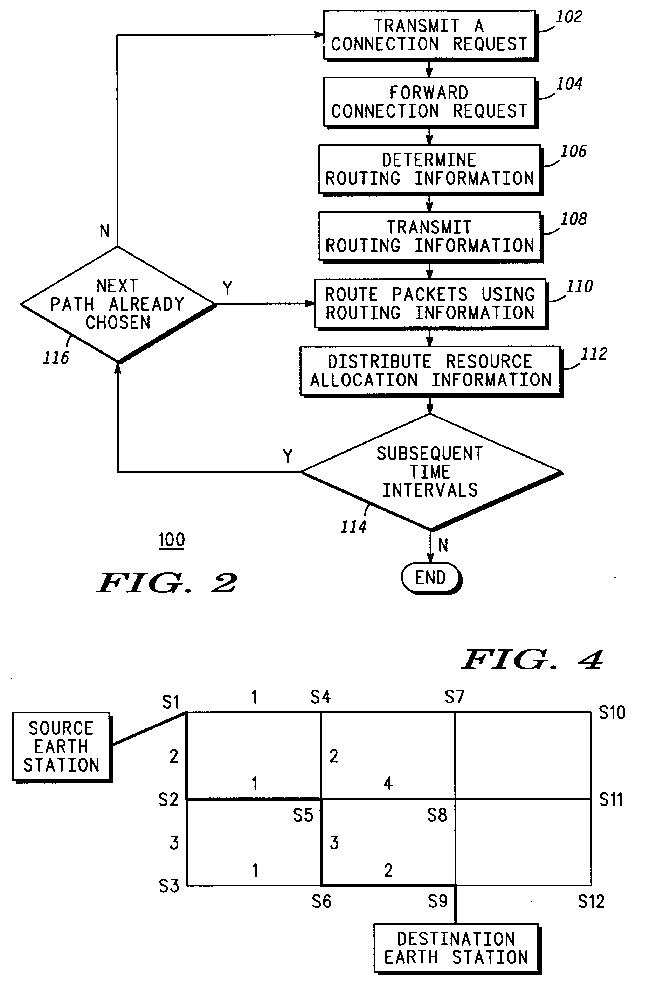

FIG. 2 shows a flowchart of method 100 for determining routing information according to a preferred embodiment of the present invention. Method 100 may be used to establish communication between earth stations 50 and 51, between subscriber unit 30 and an earth station 50 or 51, or between subscriber units 30 and 31.

Method 100 begins in step 102 when a source earth station (or a subscriber unit) transmits a connection request to a satellite that is currently serving it. This satellite is identified as a "currently serving satellite" (or simply, a source satellite). As shown in the example of FIG. 1, satellite 21 is the currently serving satellite for source earth station 50 at the time of the connection request. Included in the connection request is the identification of the destination earth station or subscriber unit, the amount of bandwidth to be provisioned between the source and destination earth stations or subscriber units and optionally, the time duration for which the connection is desired.

A destination satellite is a currently serving satellite for a destination earth station. For example, satellite 23 is the destination satellite and the currently serving satellite for destination earth station 42. It may be noted that the movement of satellites 21-29 in the constellation 20 causes the source satellite (and/or the destination satellite) to change with time as the source satellite moves out of range of the source earth station (or the destination satellite out of range of the destination earth station).

Currently serving satellite forwards in step 104 the connection request to a serving ground control station. A serving ground control station handles call setup and admission control functions on behalf of the currently serving satellite. As shown in FIG. 1, ground control station 40 is the serving ground control station on behalf of currently serving satellite 21. Note, that as a satellite moves in its orbit, the serving ground control station can change (assuming multiple ground control stations are used in a system). Most importantly, currently serving satellite does not have to have a direct communication link to its serving ground control station. Control information from the currently serving satellite to its serving ground control station may pass through one or more satellites along a control path until it reaches a satellite that communicates directly with the serving ground control station. For example, suppose satellite 22 of FIG. 1 is the currently serving satellite of earth station 50 and ground control station 40 is the serving ground control station for currently serving satellite 22. Currently serving satellite 22 transmits the connection request to satellite 21 which then passes the connection request via its direct communication link to serving ground control station 40.

After the serving ground control station receives the connection request in step 104, serving ground control station determines in step 106 whether sufficient resources are available for setting up the connection at an initial time interval. If the connection request specifies a specified length of time that the call will take, serving ground control station may also determine in step 106 whether sufficient resources are available at subsequent time intervals. If the connection is of unknown duration as indicated from the connection request, the serving ground control station identifies an initial time interval 1 of duration T1, computes the path for that time interval 1 and conveys the path to the source earth station using the currently serving satellite. In general, the serving ground control station computes path (I+1) to be used in time interval (I+1) and transmits the path (I+1) to the source earth station via the currently serving satellite in anticipation of the need. If the call from the source earth station to the destination earth station terminates before time interval I expires, path (I+1) is not used. If not, the source earth station will use path (I+1) in time interval (I+1). During time interval (I+1), the serving ground control station computes and transmits the path to be used by the source earth station in time interval (I+2).

Each of the serving ground control stations stores information about the state of the network, including but not necessarily limited to, the amount of available and used bandwidth on each link and time durations of calls that use specific links. These tables are continuously updated by each of the serving ground control stations (see step 112 below). The network state information is used for determining whether sufficient resources are available for setting up the connection and for determining the necessary paths that are available for provisioning the connection.

The serving ground control station identifies in step 106 an ordered sequence or series of paths and related time intervals. A path is characterized by which route a packet will follow through the network during a predetermined time interval or period. For example, a path may comprise information about which nodes the packet will be routed through the network. The number and length of the time intervals are dependent on how long the call or connection will take. If the call is of indeterminate duration, the serving ground control station calculates a path through the nodes before the next time interval begins. Moreover, the initial time interval begins at the start of the connection and may be shorter in length than subsequent time intervals. This may be due to the fact that the currently serving satellite is handing-off to another satellite. The length of a time interval is directly related to how long the source satellite is in view of the source earth station and the destination satellite is in view of the destination earth station. In other words, the time interval is directly related to how the satellite topology is changing. The length of the time intervals may or may not be the same.

FIG. 3 shows an example of an ordered sequence of paths and associated time intervals. As shown in FIG. 3, there are four paths, each of the paths is associated with a single time interval. During time interval 1, path 1 is taken through the network. Similarly, packets are routed through the network along path 2 during time interval 2, along path 3 during time interval 3 and finally, along path 4 during time interval 4.

Once the paths and associated time intervals are identified in step 106, the routing information (e.g., path I and corresponding time interval I) is transmitted from the serving ground control station to the source earth station (or subscriber unit). The routing information may be sent from the serving ground control station to the source earth station (or subscriber unit) via many ways, including for example, microwave, direct land lines, terrestrial cellular telecommunications or satellite telecommunications.

Alter the source earth station receives the routing information from the serving ground control station in step 108, the source earth station encapsulates or adds the routing information to the packets that are being sent to the currently serving satellite. Encapsulation includes putting each link that will be taken in the network into a routing header that is added to the packet. Based on the routing information, the source earth station sends packets that are encapsulated with the routing information to the currently serving satellite, and then they are self-routed through the network (e.g., satellites) based on the path chosen by the serving ground control station. Each of the paths is associated with a designated time intervals; thus during a specified time interval, a certain path is taken through the network.

FIG. 4 shows an example of how the paths chosen by the serving ground control station are used by the source earth station and satellites in a space-based mobile telecommunication system for the purposes of switching and routing packets from source earth station ("SES") to destination earth station ("DES"). As shown in FIG. 4, an "S" refers to a satellite, while a single digit number refers to a link between two satellites. S1 is the currently serving satellite for SES, while S9 is the currently serving satellite for DES. The path chosen for routing packets from SES to DES is shown as a solid, boldfaced line. Traffic is switched and routed along the path SES ->S2->S1-> S5->S6->S9-> DES. The labels associated with the links are interpreted as follows. Satellite S5 is connected to four satellites: S2 via link 1, S4 via link 2, S6 via link 3 and S8 via link 4. The labels have local significance, meaning that the identifying numbers on links may not be the same for S2 as they are for S1 or S3. For example, the link from S1 to S2 may have a different identifying number than the link from S2 to S1.

A packet originating at SES and destined for DES will be encapsulated at SES with the necessary packet routing and related information. An encapsulated packet has at least two fields that are essential for traffic routing: a routing header and a packet sequence number. An additional packet header and packet trailer fields may be provided for other overhead functions which are not important to the present invention. The routing header field has N subfields, each L bits in length. The value of L is chosen such that L=ceiling(log2(max_node_degree). Max_node_degree is the maximum number of links for connecting a node to other nodes. For example, if max_node_degree is at most 16, then L=4 bits are needed. A packet sequence number is used to associate a sequence number with the packet that is being transported. A preferred length for the packet sequence number field may be 24 bits, for example. This would allow the packet sequence number to have 16 million packets before reusing the packet sequence number values. A precise choice for the length of the packet sequence number field may vary depending on the application. The packet sequence number is used by the destination earth station for ordering the packets into the proper sequence. Packets may be received out of order by the DES or the subscriber unit because the path changes in a dynamic topology network.

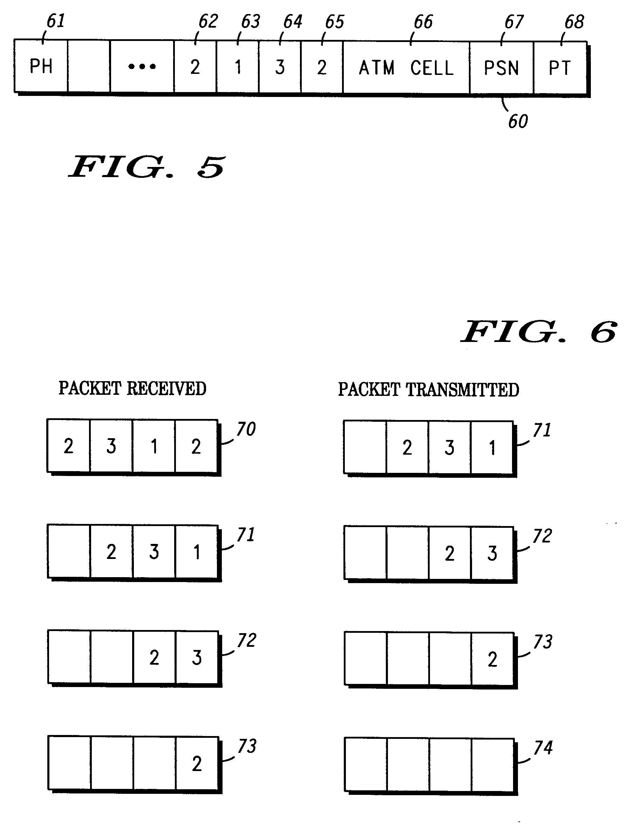

FIG. 5 shows an example of an encapsulated packet with routing and related information. The shown in FIG. 5, packet 60 is characterized by a summary of flow along the path from the currently serving source satellite to a destination satellite. FIG. 5 will be explained as it relates to the network shown in FIG. 4. For simplicity, the identity of SES and DES stations, in packet 60 are not shown. As shown in FIG. 5, packet 60 is characterized by a variety of fields 61-68. Packet header 61 is followed by the routing header stored in fields 62-65, followed by ATM cell 66, packet sequence number 67 and packet trailer 68. The routing header is characterized by information necessary for self-routing the packet through the network. In packet 60 shown in FIG. 5, subfields 62-65 make up the routing header. Packet header 61, ATM cell information 66 and packet trailer are unimportant to the present invention.

When a packet first arrives at the currently serving satellite, the currently serving satellite uses the first right-most subfield within the routing header field to determine the outgoing link of where the packet should be sent. FIG. 6 shows an example of routing a packet through a network according to the routing information. FIG. 6 will be explained as it relates to routing a packet through the nodes shown in FIG. 4. When the packet is received by S1, the packet is characterized by routing information 70. Based on routing information 70, S1 determines on which link to send the packet along. In this case, the packet is going to be sent along link 2, the first subfield in routing information 70 (i.e., the right-most subfield). However, before the packet is sent, all the subfields in the routing header 70 are shifted to the right (e.g., by L=bits), resulting in routing header 71. Accordingly, the "1" is shifted to the right to replace the "2", the "3" replaces the "1" and the "2" replaces the "3". S1 sends the packet containing routing header 71 over link 2. S2 receives the packet from S1 over link 2.

Once S2 receives the packet and routing header 71, S2 determines that it will send the packet along link 1. The routing header is shifted to the right to become routing header 72, and then the packet is sent along link 1. S5 receives the packet because S2 is connected to S5 along link 1 as shown in FIG. 4.

After S5 receives the packet and routing header 72, S5 determines that it will send the packet along link 3. The routing header is shifted to the right to become routing header 73, and then the packet is sent along link 3. S6 receives the packet because S5 is coupled to S6 via link 3 as shown in FIG. 4.

Once S6 receives the packet and routing header 73, S6 determines that it will send the packet along link 2. The routing header is shifted to the right to become routing header 74, and then the packet is sent along link 2. S9 receives the packet because S6 and S9 are coupled together via link 2. S9 is the final satellite or node in the constellation. The packet is then routed or transmitted down to the DES or the designated subscriber unit.

Returning to the flowchart shown in FIG. 2, once the source earth station encapsulates the packets using the chosen routes determined by the serving ground control station, the packets are routed to the currently serving satellite and through the network according to the route provided for a specific time interval in step 110. Next in step 112, the serving ground control station communicates its resource allocation decisions to other serving ground control stations in the system. This may be communicated over separate control channels not shown in FIG. 1. This process enables other serving ground control stations to update their databases to have the same view of the network load and topology, i.e., the current availability of resources in the space-based telecommunication system as a function of time.

Once the resource allocation information is sent to the other serving ground control stations, the source earth station determines in step 114 whether there are any subsequent time intervals that need an ordered sequence of paths and resources. If there are no more time intervals, method 100 ends. If there are, source earth station in step 116 determines whether the next path for the next time interval was already chosen. If the source earth station did not receive the routing information for subsequent time intervals from the serving ground control station, the source earth station returns to step 102 where a connection request is transmitted to the currently serving satellite. Step 102 is followed by steps 104, 106, 108, 110 and 112, 114 and 116, and they are repeated until the call terminates. If the source earth station received the routing information for subsequent time intervals, steps 110, 112, 114 and 116 are repeated until the call terminates. Method 100 ends when the call terminates, assuming that the last time interval corresponds to when the call is terminated.

It will be appreciated by those skilled in the art that the present invention supports connection-oriented services in a network with changing topology. Moreover, the present invention routes packets through a space-based mobile telecommunication network, such as a constellation of low-earth orbit (LEO) satellites, that may be coupled to fixed, terrestrial-based, standard ATM networks.

Accordingly, it is intended by the appended claims to cover all modifications of the invention which fall within the true spirit and scope of the invention. For example, a subscriber unit may make a connection request directly to a satellite. Instead of an earth station making a connection request to a currently serving satellite, a subscriber unit may make a connection request which bypasses the earth station. Moreover, a subscriber unit may be at the receiving end of a connection which bypasses the use of a destination earth station. Additionally, other forms of encoding routing information are also possible. For example, subfields in the routing header may be specified in the reverse order of what is shown in FIG. 6. Then, instead of using the right-most subfield in the routing header to identify the next link, the left-most will be used by S1. Another modification is to send the connection request directly to the source earth station, effectively bypassing the currently serving satellite.

## Claims

1. A method (100) of routing packets (60) through a network of nodes (20), characterized by the steps of:
a) receiving a connection request;
b) determining routing information for sending the packets (60) through the network of nodes (20);
c) encapsulating the packets (60) with the routing information; and
d) routing the packets (60) through the network of nodes (20) based on the routing information.

2. A method (100) of routing packets (60) through a network of nodes (20) for a call, characterized by the steps of:
a) receiving a connection request;
b) determining routing information for sending the packets (60) through the network of nodes (20) during a time interval;
c) encapsulating the packets (60) with the routing information;
d) routing the packets (60) through the network of nodes (20) based on the routing information during the time interval; and
e) repeating steps (b)-(d) for any subsequent time intervals until the call is completed.

3. A method as recited in claim 2, further characterized by the step of transmitting resource allocation information to ground control stations (40,41) servicing the network of nodes (20).

4. A method of routing packets (60) through a network (20), characterized by the steps of:
a source earth station (50) transmitting a connection request;
a currently serving satellite (21) forwarding the connection request to a serving ground control station (40);
the serving ground control station (40) determining routing information for sending the packets (60) through the network;
the serving ground control station (40) transmitting the routing information to the source earth station (50);
the source earth station (50) encapsulating the packets (60) with the routing information; and
routing the packets (60) through the network (20) based on the routing information.

5. A method of routing packets (60) through a network (20), the network (20) comprising nodes (21-29), the method characterized by the steps of:
a subscriber unit (30) transmitting a connection request;
a currently serving satellite (21) forwarding the connection request to a serving ground control station (40);
the serving ground control station (40) determining routing information for sending the packets (60) through the network (20);
the serving ground control station (40) transmitting the routing information to the subscriber unit (30);
the subscriber unit (30) encapsulating the packets (60) with the routing information; and
the subscriber unit (30) and the nodes (20) routing the packets (60) through the network (20) based on the routing information.

6. A method of routing packets (60) through a network (20), the network (20) comprising satellites (21-29), the method characterized by the steps of:
a source earth station (50) transmitting a connection request;
a currently serving satellite (21) forwarding the connection request to a serving ground control station (40);
the serving ground control station (40) determining routing information for sending the packets (60) through the satellites (21-29);
the serving ground control station (40) transmitting the routing information to the source earth station (50);
the source earth station (50) encapsulating the packets (60) with the routing information; and
the source earth station (50) and the satellites (21-29) routing the packets (60) through the network (20) based on the routing information.

7. A system for routing packets (60) through a network of nodes (20), characterized by:
a subscriber unit (30) being capable of transmitting a connection request;
a currently serving satellite (21) coupled to the subscriber unit (30) and being capable of receiving the connection request and forwarding the connection request;
a serving ground control station (40) coupled to the currently serving satellite (21) and being capable of determining routing information for sending the packets (60) through the network (20) and transmitting the routing information to the subscriber unit (30);
the subscriber unit (30) being further capable of encapsulating the packets (60) with the routing information and routing the packets (60) to a node (21-29) identified in the routing information; and
the nodes (20) being further capable of routing the packets (60) through the network (20) based on the routing information.

8. A system for routing packets (60) through a network (20) of a plurality of nodes (21-29)), characterized by:
a source earth station (50) being capable of transmitting a connection request;
a currently serving satellite (21) coupled to the source earth station (50) and being capable of receiving the connection request and forwarding the connection request;
a serving ground control station (40) coupled to the currently serving satellite (21) and being capable of determining routing information for sending the packets (60) through the network (20) and transmitting the routing information to the source earth station (50);
the source earth station (50) being further capable of encapsulating the packets (60) with the routing information and routing the packets (60) to one of the nodes (21-29) identified in the routing information; and
the nodes (21-29) being further capable of routing the packets (60) through the network (20) based on the routing information.

9. A system for routing packets (60) through a network (20), characterized by:
a plurality of nodes (21-29);
a source earth station (50) coupled to one of the nodes (21-29) and being capable of transmitting a connection request; and
a serving ground control station (40) coupled to the source earth station (50) and being capable of receiving the connection request, determining routing information for sending the packets (60) through the network (20) and transmitting the routing information to the source earth station (50),
the source earth station (50) being further capable of encapsulating the packets (60) with the routing information and routing the packets (60) to one of the nodes (21-29) identified in the routing information,
the nodes (21-29) being further capable of routing the packets (60) through the network (20) based on the routing information.

10. A system for routing packets (60) through a network (20), characterized by:
a plurality of satellites (21-29);
a source earth station (50) coupled to one of the satellites (20) and being capable of transmitting a connection request; and
a serving ground control station (40) coupled to the source earth station (50) and being capable of receiving the connection request, determining routing information for sending the packets (60) through the network (20) and transmitting the routing information to the source earth station (50);
the source earth station (50) being further capable of encapsulating the packets (60) with the routing information and routing the packets (60) to one of the satellites (21-29) identified in the routing information; and
the satellites (21-29) being further capable of routing the packets (60) through the network (20) based on the routing information.
